# EUROPEAN PATENT SPECIFICATION

(11) **EP 2 938 878 B1**
(45) Date of publication and mention of the grant of the patent: **05.09.2018**
(21) Application number: 12823192.5
(22) Date of filing: 28.12.2012
(51) Int. Cl.: F03B 17/06, F03D 3/06, F03D 9/00

(54) **DEVICE USING FLOW OF GASES OR LIQUIDS**
VORRICHTUNG MIT GAS- ODER FLÜSSIGKEITSSTROM
DISPOSITIF UTILISANT LE FLUX DE GAZ OU DE LIQUIDES

(43) Date of publication of application: 04.11.2015
(73) Proprietor: SIMETI GROUP LIMITED, Edinburgh, EH3 9WJ (GB)
(72) Inventor: MILATA, Milan, 282 01 Tismice (CZ); SILHAVY, Frantisek, 103 00 Praha - Kolovraty (CZ)
(74) Representative: Danek, Vilém
(86) International application number: PCT/CZ2012/000141
(87) International publication number: WO 2014/101904

(56) References cited:
- WO-A1-03/098036
- DE-A1- 19 603 982
- GB-A- 2 360 551
- US-A1- 2012 061 968

## Description

### Technical Field

The invention relates to a device using flow of gases and liquids. It uses kinetic energy of flow of gas or liquid which is transformed into circular motion intended to actuate various devices, especially for production of electric energy.

### Background Art

There are known various solutions of small power plants, see e.g. WO 03/098036 A1, that use water or wind, working mostly on the principle of wheels or wings with different numbers of faces or propellers. Such devices are used particularly in the local conditions with low or medium power. Some designs of these devices are made as wind turbines with higher number of controllable or controlled blades. Further are known propeller designs with a different number of blades, where these structures are attached to the top parts of the pylons. Requirements to ensure correct orientation in relation to wind or water flow are secured in different ways, and so are fulfilled the requirements for stabilizing rotor device.

Solution to the said requirements is provided in different ways, especially by using automated control systems regulating size of active area of the blade. Also ensuring proper orientation of the device to the wind or water flow is done in relatively complex and costly manner. Despite the experience of the aviation industry is used in this field as well, such devices are complicated and relatively expensive.

Currently, there are structurally different solutions in use. In comparison to this invention introduced in this application, the earlier solutions are difficult to manufacture and install, or they are not sufficiently effective, or are dependent on the setting of the direction of flow.

### Disclosure of the invention

Said deficiencies are reduced to a large extent by device using flow of gases or liquids that uses kinetic energy of flow of gas or liquid in order to transform it into circular motion to drive various devices, especially for production of electric energy.

The principle of this invention lies in a device that operates on the basis of the drag of the object to be flowed. The plate which is set perpendicularly to the flow direction has a considerably higher coefficient of drag (Cx) than the plate set in the direction of flow. Setting of the plate is performed by synchronization element that is associated with a directional vane. This directional vane determines the optimal directional setting of the plate and thus it maximizes the efficiency of the device. Plates can be made of different materials, composite, plastic, polyurethane, rubber and textile or metal. These plates can be covered with photovoltaic film, which improves the performance of the entire system. For conditions of high frost, a layer of nanotechnology coating, which ensures high durability, can be applied to the device. For emergency situations (floods, etc.), this device is designed with mobile chassis with telescopic self-anchoring mast.

Said device includes a rotor with arms on which the plates are pivotally mounted; the plates can be solved in different ways. Standard plates are flat and straight, made of materials such as wood, plastic, composites and metal. An advantageous variant are plates made of combination of rubber and textile, the plate further being mounted into metal frame.

Due to this principle, such plate is more effective than flat plate. The plate, which is set perpendicular to the direction of wind flow then arches by 2-4 cm in its center, depending on the wind speed, and acts as a sail. Such plate captures more wind, which causes more pressure than on a flat plate. With the synchronization element the synchronization of the plates remains the same. Upon completion of the rotation of the plate that was perpendicular to the direction of wind flow, the rubberized material is set to the plane and thus it produces minimal drag to the wind.

Another variation are plates having an S-shape, which make it easier for the synchronization element to rotate the plate. The plate is having double S-shape in its length, always from its center to its margins on different directions. The angle of curvature can be determined from the figure.

Synchronization elements are elements that keep the plates in identical position towards the directional vane. The directional vane sets the position of all plates, or of the entire device respectively, to the axis of flow. All synchronization elements represent a plate synchronization system. Synchronization elements can be designed in various manners, for example by chain with gears, belts and distribution wheels. In this case and after long research we have chosen a method of worm gears, gearwheels and propeller shaft.

These plates are using synchronous elements associated with directional vane, which ensures the correct position of plates to the direction of flow. The whole device is pivoted on the supporting axis, which may be in any position, but always perpendicular to the axis of flow.

The device is connected directly to the generator. With your own generator with external rotor, the device is directly connected to the rotor of the generator via the connecting socket.

Due to the dynamic balance and uniformity of operation of the device, the number of plates must be more than one.

The synchronization system is set to the directional vane at a ratio of 1: 2, which means that for a single rotor revolution the plate is rotated only by 180°. The design can be technically made by various means, such as by a chain, belt drive, bevel gear, gear wheels and the like.

Compared with other systems that use the difference of drag coefficient Cx, the efficiency of this device is higher because it uses synchronization with the greatest possible difference in drag coefficient. In comparison with systems with tilting blades, this system has also low noise levels thanks to a simple and smooth synchronization of rotation of the plates during operation.

The device can be used especially in areas that are out of reach of the power supply, for example power irrigation pumps, water heating, drive of various machines, etc.

### Disclosure of figures

The invention will be further illustrated by the drawing, in which Figure 1 shows the device according to the invention in side view and, in Figure 2 and 3, the device in different position of plates is shown.

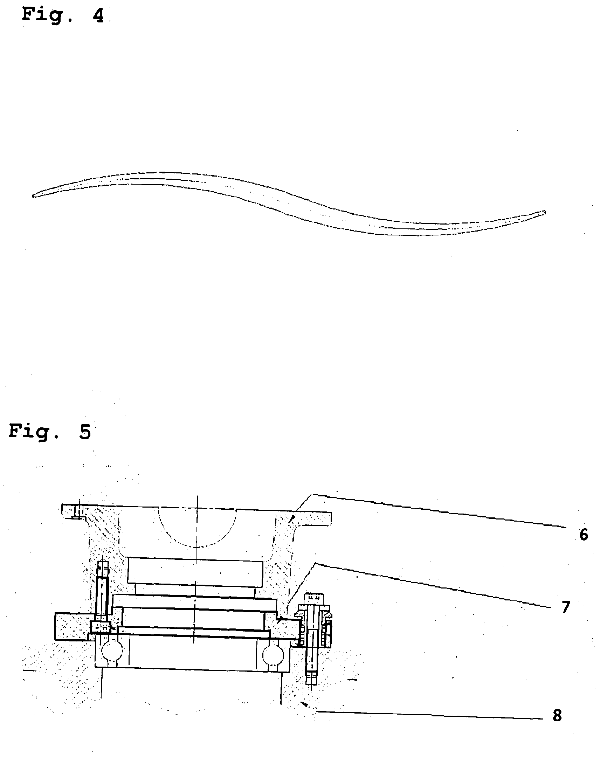

Fig. 4 shows an embodiment of the curved plate technology, due to which increased efficiency of the device by 10% - 15% is achieved, and where the figure shows the profile curvature of the plate from the top.
Fig. 5 shows a direct connection to the electrical energy generator. The principle of interconnection of turbine and generator, in which the turbine is connected directly to the generator via the slot, is displayed therein.

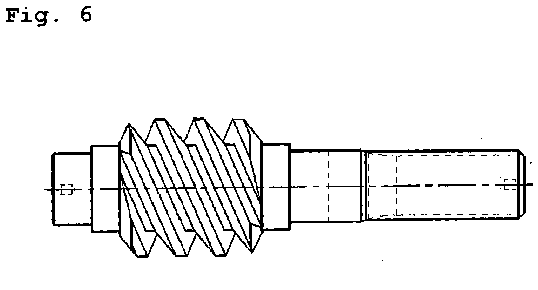

Fig. 6 illustrates an embodiment of worm shaft.

### Examples of embodiment of the invention

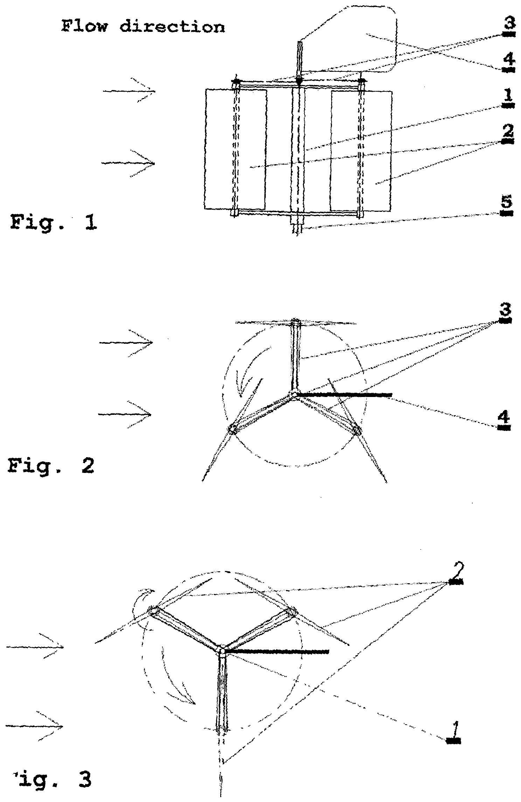

The invention according to Figures 1, 2 and 3, comprises a rotor 1, in which the arms are pivotally attached to the plates 2. These plates are connected through the synchronization system 3 with directional vane 4, which ensures correct positioning of plates to the direction of flow. The whole device is pivoted on the supporting axis 5, which may be in any position, but always perpendicular to the axis of flow.

The number of plates must be more than one (2, 3, 4, 5, 6, 7,... x) due to the dynamic balancing of uniform operation of the device. In the embodiment according to this example the device contains three plates.

The synchronization system is set to the directional vane at a ratio of 1: 2, which means that for a single rotor revolution the plate is rotated only by 180°. The design can be technically made by various means, such as by a chain, belt drive, bevel gear, gear wheels and the like.

Fig. 5 shows a direct connection to the electrical energy generator. The principle of interconnection of turbine and generator, in which the turbine 6 is connected directly to the generator 8 via the slot 7, is displayed therein.

## Claims

1. A device using flow of gases or liquids, comprising a rotor (1) with at least two plates (2) being pivotally mounted on rotor arms, a synchronization system (3), a bearing axis (5) and a directional vane (4), whereby the plates (2) are connected through the synchronization system (3) with the directional vane (4) and whereby the rotor (1) and the directional vane (4) are pivotally mounted on the bearing axis (5) being always perpendicular to the flow axis.

2. The device according to claim 1, **characterized in that** the plates (2) are covered with photovoltaic foil or with layer of nanotechnology coating.

3. The device according to claim 1, **characterized in that** the synchronization system (3) consists of worm gears, gearwheels and propeller shaft, and the synchronization system (3) is set to the directional vane (4) at a ratio of 1: 2, reaching plate (2) rotation only by 180° for a single rotor (1) revolution.

## Patentansprüche

1. Die Anlage für die Ausnutzung der Strömung von Gasen und Flüssigkeiten, die einen Rotor (1), an dessen Armen wenigstens zwei Platten drehend befestigt sind (2), ein Synchronisierungssystem (3), eine Tragachse (5) und einen Richtungsflügel (4) einschließt, **zeichnet sich dadurch aus, dass** die Platten (2) mit Hilfe des Synchronisierungssystems (3), die mit dem Richtungsflügel (4) verbunden sind, und der Rotor (1) und der Richtungsflügel (4) drehbar auf der Tragachse (5) gelagert sind, die immer senkrecht zur Strömungsachse ist.

2. Die Anlage laut Anspruch 1 **zeichnet sich dadurch aus, dass** die Platten (2) mit einer Photovoltaikfolie bedeckt oder mit einer Schicht eines nanotechnologischen Anstrichs versehen sind.

3. Die Anlage laut Anspruch 1 **zeichnet sich dadurch aus, dass** das Synchronisierungssystem (3) aus Schneckengetrieben, Zahnrädern und einer Kardanwelle besteht, und das Synchronisierungssystem (3) im Verhältnis 1: 2 zum Richtungsflügel (4) so eingestellt ist, damit sich die Platte (2) nur um 180° bei einer Umdrehung des Rotors (1) dreht.

## Revendications

1. Dispositif pour utilisation du flux de gaz et de liquide, comprenant un rotor (1), sur les bras duquel sont montés de manière rotative au moins deux plaques (2), un système de synchronisation (3), un axe de support (5) et une barre directionnelle (4), **caractérisé en ce que** les plaques (2) sont reliées par l'intermédiaire du système de synchronisation (3) à la barre directionnelle (4) et le rotor (1) avec la barre directionnelle (4) sont montés à pivot sur un axe de support (5) qui est toujours perpendiculaire à l'axe de flux.

2. Dispositif selon la revendication 1, **caractérisé en ce que** les plaques (2) sont recouvertes d'une feuille photo-voltaïque ou munies d'un revêtement nanotechnologique.

3. Dispositif selon la revendication 1, **caractérisé en ce que** le système de synchronisation (3) est constitué d'engrenages à vis sans fin, d'engrenages et de cardans, et le système de synchronisation (3) est réglé dans un rapport de 1 : 2 par rapport à la barre directionnelle (4) de sorte que la plaque (2) ne tourne que de 180° par un tour du rotor (1).
